# EUROPÄISCHE PATENTSCHRIFT

(11) **EP 2 724 065 B1**
(45) Veröffentlichungstag und Bekanntmachung des Hinweises auf die Patenterteilung: **27.05.2015**
(21) Anmeldenummer: 12718074.3
(22) Anmeldetag: 26.04.2012
(51) Int. Cl.: F16L 19/02

(54) **SCHLAUCHNIPPEL UND KORRESPONDIERENDE SCHLAUCHANORDNUNG**
HOSE NIPPLE AND CORRESPONDING HOSE ARRANGEMENT
RACCORD DE TUYAU FLEXIBLE ET SYSTÈME DE TUYAU FLEXIBLE CORRESPONDANT

(30) Priorität: 24.06.2011 DE 202011104370 U
(43) Veröffentlichungstag der Anmeldung: 30.04.2014
(73) Patentinhaber: Neoperl GmbH, 79379 Müllheim (DE)
(72) Erfinder: KURY, Werner, 79379 Müllheim (DE)
(74) Vertreter: Börjes-Pestalozza, Henrich
(86) Internationale Anmeldenummer: PCT/EP2012/001788
(87) Internationale Veröffentlichungsnummer: WO 2012/175154

(56) Entgegenhaltungen:
- DE-A1- 19 705 857
- GB-A- 2 230 070
- NL-A- 268 571
- US-A- 469 830
- US-A- 3 427 053
- US-A- 4 586 735
- US-A- 4 819 908
- US-A- 5 027 845
- US-A- 5 145 219
- US-A1- 2005 098 753

## Beschreibung

Die Erfindung betrifft ein Schlauchnippel mit einem einen Durchströmkanal aufweisenden Nippelgrundkörper, an welchem eine Mündung zum Anschluss an ein wasserführendes System ausgebildet ist, wobei an dem Nippelgrundkörper des Schlauchnippels ein um die Mündung umlaufender Anlageflansch angeformt ist, und mit einem Dichtungsring zur Abdichtung des Anlageflansches, wobei der Dichtungsring an einem den Dichtungsring hintergreifenden Kragen des Schlauchnippels gehalten ist.

Die Erfindung betrifft weiter eine Schlauchanordnung für ein wasserführendes System, umfassend ein Schlauchanschlussstück mit einem Schlauchnippel und mit einem an dem Schlauchnippel gehaltenen Anschlusselement zum lösbaren Anschluss an das wasserführende System und weiter umfassend einen Druckschlauch, welcher an dem Schlauchnippel mit einer Quetschhülse kraft- und/oder formschlüssig befestigt ist.

Derartige Anschlüsse sind bekannt und haben sich bewährt. Bei den bekannten Anschlüssen ist hierbei der Kragen einstückig mit dem Schlauchnippel aus einem metallischen Werkstoff wie Messing und dergleichen gedreht, und ein elastischer Dichtungsring ist über den Kragen gezogen und in die Dichtungsposition zur Abdichtung des Anlageflansches eingesetzt. Auf diese Weise kann der Schlauchnippel gemeinsam mit dem Dichtungsring vertrieben werden, ohne dass die Gefahr besteht, dass der Dichtungsring verloren geht. Es sind auch Schlauchnippel ohne Kragen bekannt, bei denen die Dichtungsringe, die häufig aus einem nicht-elastischen Material, beispielsweise aus einem Faserverbundwerkstoff, gefertigt sind, separat mitgeliefert werden.

Dies hat zur Folge, dass die Fertigung eines Schlauchnippels davon abhängt, ob dieser Schlauchnippel mit einem elastischem Dichtungsring oder einem nicht-elastischem Dichtungsring kombiniert werden soll. Ein nachträglicher Wechsel zwischen diesen beiden Dichtungsringarten ist im Prinzip nicht möglich.

Aus der US 4469 830 A ist bereits eine Bremsschlauchkupplung vorbekannt, die zwei aneinander anlegbare und miteinander lösbar kuppelbare Kupplungsteile hat, die ein den Kupplungsbereich rechtwinklig zur Kupplungs-Längsachse angeordneter Durchtrittskanal durchsetzt. Jedes der Kupplungsteile weist dazu eine Kupplungsöffnung auf, welche Kupplungsöffnungen in gekuppeltem Zustand der Kupplungsteile unter Bildung des Durchtrittskanäles dicht aneinander anliegen. Jede Kupplungsöffnung wird von einem Ringflansch umgrenzt, auf dem eine Dichtmanschette aufliegt, die derart über die Kupplungsöffnung vorsteht, dass die in gekuppeltem Zustand dicht aneinander anliegenden Dichtmanschetten den zur Weiterleitung der Druckluft vorgesehenen Durchtrittskanal umgrenzen. Die Dichtmanschetten weisen an ihrem Manschetten-Innenumfang jeweils eine Ringnut auf, in die ein Rastvorsprung eingreift, der an einer die benachbarte Kupplungsöffnung mit einer Querschnittserweiterung hintergreifenden Haltehülse angeformt ist. Die aus US 469 830 A vorbekannte Trennschlauchkupplnag dient jedoch nicht als Schlauchnippel, sondern wird als Bremsschlauchkupplung zur Weiterleitung der Druckluft verwendet.

Aus der DE 197 05 857 A1 ist bereits eine Rohrleitung mit zwei Vortriebsrohren vorbekannt, die über eine Verriegelungsmuffe miteinander verbunden sind. Solche Vortriebsrohre werden verwendet, wenn das Ausschachten eines Grabens und das Verlegen der Rohrleitung im Graben, beispielsweise beim Unterqueren von stark befahrenen Straßen, belebten Plätzen oder Gebäuden, nicht möglich ist. Um die Vortriebsrohre fest miteinander zu verbinden und um die Vortriebsrohre dazu ineinandergreifen zu lassen, sind in einem Einsteck- und auf einem Spitzende dieser Rohrleitungsabschnitte zwei hintereinanderliegende und zueinander kompatible, im wesentlichen L-förmig ausgebildete Anlageausnehmungen anbeordnet, In der ersten, von einer Innenwandung ausgehenden Einsteck-Anlageausnehmung ist wenigstens ein, zumindest teilweise umlaufender Schiebeblock angeordnet. In der ersten, von der Außenwandung ausgehenden Spitzende-Anlageausnehmung ist eine Dichtungsaufnahme-Ausnehmung und in der zweiten Spitzende-Anlageausnehmung sind eine umlaufende Sehiebeausnehmung und vor ihr ein wenigstens teilweise angeschrägtes Gleitflächeelement vorgesehen. Beim Einstecken des Spitzendes in das Einsteckende entsteht die erwähnte Verriegelungsmuffe, die ein kraftschlüssiges Verbinden der Vortriehsrohre miteinander sichert. Beim verlegen der vortriebs rohre entstehende Druck- und Zugbelastungen werden so aufgenommen, dass sich die Vortriebsrohre nicht voneinander lösen können. Darüber hinaus ist eine Flüssigkeitsdichte der Vortriebsrohre gewährleistet. Auch die aus DE 197 05 857 A1 vorbeschriebene Rohrverbindung stellt keinen gattungsgemäßen Schlauchnippel dar, sondern dient vielmehr zur kraftschlüssigen Verbindung zweier vortriebsrohre.

Aus der US 5,145,219 A ist eine Rohrleitung mit zwei, über eine Rohrkupplung miteinander verbundene Rohren bekannt. Um die. stirnseitig aneinander anliegenden Kupplungsteile der Rohrkupplung dicht miteinander verbinden zu können, ist in das eine Kupplungsteil ein hülsenformiges Einsteckteil eingeschoben, an dessen Stirnseite ein Dichtring mittels einer ringförmigen Haltekappe gesichert ist, die an dem Einsteckteil gehalten ist. Auch in der US 5,145,219 A ist kein gattungsgemäßer Schlauchnippel vorbeschrieben, vielmehr hat diese Druckschrift eine Rohrkupplung zum Gegenstand.

Der Erfindung liegt die Aufgabe zugrunde, die Gebrauchseigenschaften eines Schlauchnippels zu verbessern.

Zur Lösung dieser Aufgabe ist erfindungsgemäß bei einem Schlauchnippel der eingangs beschriebenen Art vorgesehen, dass der Kragen an einem hülsenförmigen Einsetzteil ausgebildet ist, dass das hülsenförmige Einsetzteil die Ringöffnung des Dichtungsringes durchsetzt, und dass das Einsetzteils über eine Schnapp- oder Rastverbindung mit dem Nippelgrundkörper verbunden ist. Von Vorteil ist dabei, dass der Kragen an dem Schlauchnippel nachträglich nach der Fertigung des Schlauchnippels angebracht werden kann, so dass auch nach der Fertigung des Schlauchnippels die Möglichkeit besteht, von einem nicht-elastischen Dichtungsring zu einem elastischen Dichtungsring zu wechseln und umgekehrt. Dies erhöht die Gebrauchseigenschaften des Schlauchnippels, da der Schlauchnippel flexibler an die unterschiedlichen Anwendungsfälle angepasst werden kann. Wird die Schnapp- oder Rastverbindung wieder gelöst, so kann der Dichtungsring sogar mühelos ausgetauscht werden.

Der Verlauf des Durchströmkanals definiert eine Achse, bezüglich welcher die Begriffe axial und radial gebraucht werden. Bevorzugt ist der Schlauchnippel rotationssymmetrisch um die Achse ausgebildet.

Besonders günstig ist es, wenn das Einsetzteil den Durchströmkanal dadurch verlängert, dass das Einsetzteil eine Durchlassöffnung zur Mündung des Durchströmkanals des Nippel grundkörpers bildet. Das Einsetzteil umschließt somit ringförmig die Durchlassöffnung. Von Vorteil ist dabei, dass das Einsetzteil die Strömungseigenschaften des Schlauchnippels im Mündungsbereich des Durchströmkanals nicht oder nur unwesentlich vermindert.

Zur Herstellung der Schnapp- oder Rastverbindung kann vorgesehen sein, dass das Einsetzteil wenigstens eine Rastnase aufweist, welche in Gebrauchsstellung in wenigstens eine Rastnasenaufnahme an dem Nippelgrundkörper eingreift. Bevorzugt ist die wenigstens eine Rastnase außenseitig am Einsetzteil ausgebildet, und die wenigstens eine Rastnasenaufnahme ist innenseitig am Nippelgrundkörper ausgebildet. Besonders günstig ist es, wenn für jede Rastnase eine entsprechende Rastnasenaufnahme vorgesehen ist.

Es können mehrere Rastnasen in Umfangsrichtung segmentartig aufeinander folgend an dem Einsetzteil angeformt sein, um einen gleichmäßigen Halt des Einsetzteils an dem Nippelgrundkörper zu erreichen. Besonders günstig es jedoch, wenn die Rastnase an dem Einsetzteil um die Mündung und/oder die Durchlassöffnung durchgehend umlaufend ausgebildet ist. Somit ergibt sich eine ringförmige Rastnase, welche in eine entsprechende umlaufende, nutförmige Rastnasenaufnahme am Nippelgrundkörper eingreift und somit eine besonders schwer zu lösende Schnapp- oder Rastverbindung definiert und bildet.

Das Einsetzteil kann wenigstens einen Längsschlitz, vorzugsweise mehrere Längsschlitze, aufweisen, welcher (welche) sich zumindest über einen Teil der Axiallänge des Einsetzteils erstrecken kann (können). Vorzugsweise ist vorgesehen, dass das Einsetzteil durch Längsschlitze in axial erstreckte Finger unterteilt ist, welche in Umfangsrichtung zueinander beabstandet oder versetzt angeordnet sind. Besonders günstig ist eine regelmäßige Anordnung der Längsschlitze und Finger. Das Einsetzteil kann demnach von einer axialen Seite her geschlitzt ausgeführt sein. Durch die Fingerform ist eine besonders gute, sprengringartige Federwirkung erzielbar.

Es kann vorgesehen sein, dass jeder Finger an seinem freien Axialende eine Rastnase trägt und/oder dass die Finger an wenigstens einem Axialende, insbesondere dem von den Rastnasen abgewandten Axialende, durch eine ringförmige Struktur, beispielsweise den Kragen, zusammengehalten und verbunden sind. Somit unterteilen die Längsschlitze die ansonsten ringförmig umlaufende Rastnase in eine Folge von segmentartigen, einzelnen Rastnasen.

Das Einsetzteil kann auch in Umfangsrichtung durchgängig oder sogar rotationssymmetrisch ausgebildet sein.

Zur Erleichterung der Montage des Einsetzteils kann vorgesehen sein, dass das Einsetzteil zumindest im Bereich der Schnapp- oder Rastverbindung aus einem elastischen Material gefertigt ist. Vorzugsweise ist das Einsetzteil insgesamt aus einem elastischen Material gefertigt. Hierbei ist es besonders günstig, wenn das Material im Vergleich zu metallischen Werkstoffen elastisch ist, so dass die Elastizität des Einsetzteils größer ist als die Elastizität eines Bauteils mit vergleichbaren Abmessungen, welches aus einem metallischen Werkstoff gefertigt ist. Beispielsweise kann das Einsetzteil aus einem Kunststoff, beispielsweise aus einem Thermoplast oder aus einem Duroplast oder aus einem thermoplastischen Elastomer, gefertigt sein. Bevorzugt ist das Einsetzteil im Spritzgussverfahren gefertigt.

Bei einer Ausgestaltung der Erfindung kann vorgesehen sein, dass der Nippelgrundkörper aus einem metallischen Werkstoff gefertigt ist. Beispielsweise kann der Nippelgrundkörper aus Messing oder Kupfer oder Stahl oder einer Legierung mit wenigstens einem dieser Werkstoffe gefertigt sein. Von Vorteil ist dabei, dass der Nippelgrundkörper auf einfache Weise durch Drehbearbeitung herstellbar ist und dass der Nippelgrundkörper mechanisch robust ist.

Es kann vorgesehen sein, dass der Dichtungsring aus einem unelastischen Material gefertigt ist. Derartige Materialien bieten den Vorteil, dass der Dichtungsring bei einem übermäßigen Anziehen des Schlauchanschlussstücks nicht abgeschert werden kann. Vielmehr kann auf einfache Weise ein gewünschter Anpressdruck am Dichtungsring eingestellt werden, welcher eine gewünschte Abdichtung am Anlageflansch ergibt. Besonders günstig ist es, wenn der Dichtungsring aus einem Material gefertigt ist, welches unelastischer als Gummi ist. Bei weiteren Ausgestaltungen kann der Dichtungsring auch aus Gummi gefertigt sein.

Um ein Verrutschen des eingelegten Dichtungsringes zu vermeiden, kann vorgesehen sein, dass das Einsetzteil eine außenseitige Anlagefläche aufweist, an welcher der Dichtungsring in Gebrauchsstellung mit seiner Innenseite anliegt. Bevorzugt ist vorgesehen, dass die Anlagefläche radial orientiert und/oder zylindrisch ausgebildet ist.

Eine einfache Montage des Dichtungsringes an dem Nippelgrundkörper kann erreicht werden, wenn der Dichtungsring vor der Herstellung der Schnapp- oder Rastverbindung ohne eine Deformation von einer Seite auf das Einsetzteil aufsteckbar ist. Hierbei kann der Außendurchmesser des Einsetzteils an seinem vom Kragen abgewandten Ende durch den Außendurchmesser der Anlagefläche begrenzt sein. Von Vorteil ist dabei, dass der Dichtungsring auf das Einsetzteil aufgesteckt werden kann, und dass im Anschluss das Einsetzteil mit dem aufgesteckten Dichtungsring mit dem Nippelgrundkörper verrastet werden kann. Alternativ kann der Dichtungsring zur Montage auf den Anlageflansch aufgelegt werden, und das Einsetzteil ist durch den aufgelegten Dichtungsring hindurchsteckbar und mit dem Nippelgrundkörper verrastbar.

Eine Lösung der genannten Aufgabe von eigenständiger Bedeutung kann vorsehen, dass bei einem Schlauchnippel mit einem einen Durchströmkanal aufweisenden Nippelgrundkörper, an welchem einen Mündung zum Anschluss an ein wasserführendes System ausgebildet ist, wobei an dem Nippelgrundkörper des Schlauchnippels ein um die Mündung umlaufender Anlageflansch angeformt ist, vorgesehen ist, dass in dem Durchströmkanal des Schlauchnippels an dem Nippelgrundkörper ein Aufnahmeraum ausgebildet ist, in welchem Aufnahmeraum eine im Gebrauch durchströmte RV-Patrone herausnehmbar eingesetzt ist, und dass an der Mündung ein hülsenförmiges Einsatzteil über eine Schnapp- oder Rastverbindung mit dem Nippelgrundkörper verbunden ist, welches die eingesetzte RV-Patrone im Aufnahmeraum hält, wobei die RV-Patrone in Sperrrichtung die Schnapp- oder Rastverbindung arretiert. Von Vorteil ist dabei, dass eine selbstsichernde Befestigung der RV-Patrone geschaffen ist, welche einfach an einem Schlauchnippel montierbar ist.

Zur Montage wird die RV-Patrone zunächst in den Aufnahmeraum eingesetzt, und es wird das Einsetzteil im Anschluss auf den Schlauchnippel aufgesetzt und verrastet, wodurch die RV-Patrone im Aufnahmeraum gehalten ist und welches ein Herausfallen der RV-Patrone aus dem Aufnahmeraum verhindert.

Besonders günstig ist es, wenn der Schlauchnippel hierbei von der eingangs beschriebenen Art ist, wobei der erwähnte Kragen an dem hülsenförmigen Einsetzteil ausgebildet ist. Das erfindungsgemäße Einsetzteil kann somit einerseits die RV-Patrone axial im Aufnahmeraum sichern und andererseits den Dichtungsring für den Anlageflansch tragen.

Bei einer Ausgestaltung der Erfindung kann vorgesehen sein, dass der Aufnahmeraum an seinem von der Mündung abgewandten Ende über eine Durchmesserverengung in den übrigen Durchströmkanal übergeht. Von Vorteil ist dabei, dass die Durchmesserverengung einen axialen Anschlag für die RV-Patrone bereitstellt, so dass die RV-Patrone beim Betrieb in Durchströmrichtung durch die Durchmesserverengung axial gehalten werden kann.

Zur Einrichtung der selbstsichernden Arretierung der Schnapp- oder Rastverbindung kann vorgesehen sein, dass an dem hülsenförmigen Einsetzteil außenseitig wenigstens eine Rastnase ausgebildet ist, welche in Gebrauchsstellung in eine an dem Nippelgrundkörper ausgebildete Rastnasenaufnahme eingreift, und dass an dem hülsenförmigen Einsetzteil im Bereich der wenigstens einen Rastnase innenseitig eine Schrägfläche ausgebildet ist, welche vom Aufnahmeraum gesehen eine Durchmesserverengung von einem ersten Durchmesser auf einen zweiten Durchmesser bildet, wobei der erste Durchmesser größer als ein Außendurchmesser der RV-Patrone ist und der zweite Durchmesser kleiner als dieser Außendurchmesser der RV-Patrone ist. Bevorzugt ist die Schrägfläche konisch und um die Mündung umlaufend ausgebildet.

Von Vorteil ist dabei, dass durch die Schrägfläche ein Mittel bereit gestellt ist, mit welchem eine axial ausgerichtete Kraft in eine radial ausgerichtete Kraft umlenkbar ist, so dass eine axiale Beaufschlagung der RV-Patrone in eine radiale Beaufschlagung der gegenüber der Schrägfläche am Einsetzteil außenseitig ausgebildeten wenigstens einen Rastnase umwandelbar ist. Durch diese radial nach außen gerichtete Kraft wird die Rastnase in die Rastnasenaufnahme gepresst und radial fixiert, so dass die Schnapp- oder Rastverbindung arretiert ist.

Insbesondere kann vorgesehen sein, dass die RV-Patrone die oder eine innenseitige Schrägfläche des hülsenförmigen Einsetzteils in Sperrrichtung derart beaufschlagt, dass die wenigstens eine Rastnase radial in der Rastnasenaufnahme fixiert ist. Somit kann verhindert werden, dass die in Sperrrichtung betriebene RV-Patrone das Einsetzteil aus der Schnapp- oder Rastverbindung herausschlägt und so selbst aus dem Aufnahmeraum herausgedrückt werden kann.

Es kann vorgesehen sein, dass an der RV-Patrone radial außenseitig eine vorzugsweise konische Gegenschrägfläche ausgebildet ist, welche mit der oder einer innenseitigen Schrägfläche des Einsetzteils derart zusammenwirken, dass eine axiale Beaufschlagung der RV-Patrone in eine radial nach außen gerichtete Beaufschlagung der RV-Patrone einer an dem Einsetzteil außenseitig ausgebildeten Rastnase umgesetzt ist. Von Vorteil ist dabei, dass die Ausbildung zweier einander entsprechender, sich berührender und aufeinander gleitender Schrägflächen ein einfaches Mittel zur Umlenkung von Kräften ist.

Bei einer Ausgestaltung der Erfindung kann vorgesehen sein, dass das Einsetzteil eine außenseitige Anlagefläche aufweist, an welcher ein Dichtungsring in Gebrauchsstellung mit seiner Innenseite anliegt. Besonders günstig ist es dabei, wenn die Anlagefläche des Einsetzteils in axialer Richtung beidseitig durch Kragen oder Schultern begrenzt ist. Von Vorteil ist dabei, dass der Dichtungsring an dem Einsetzteil in axialer Richtung fixierbar ist, was die Montage des Einsetzteils an dem Nippelgrundkörper, nachdem die RV-Patrone in den Aufnahmeraum eingesetzt wurde, vereinfacht und erleichtert.

Es kann vorgesehen sein, dass der Aufnahmeraum eine axiale Länge aufweist, welche größer als eine axiale Länge der RV-Patrone ist. Von Vorteil ist dabei, dass somit ein axiales Spiel für die RV-Patrone gebildet ist, welches eine axiale Verschiebung der RV-Patrone beim Wechsel zwischen einem Betrieb in Durchströmöffnung und einem Betrieb in Sperrrichtung zulässt. Somit kann die RV-Patrone beim Betrieb in Durchströmrichtung in einer Position sein, welche ein Lösen der Schnapp- oder Rastverbindung erlaubt, während die RV-Patrone beim Betrieb in Sperrrichtung in eine Position axial verschoben wird, in welcher die Schnapp- oder Rastverbindung arretiert ist. In dieser Position kann das Einsetzteil nicht oder zumindest nicht unbeabsichtigt vom Nippelgrundkörper gelöst werden.

Unter einer RV-Patrone wird allgemein ein kompakter Rückflussverhinderer (RV) verstanden, welcher den Durchfluss einer Flüssigkeit nur in einer Richtung erlaubt. Eine RV-Patrone schließt daher selbsttätig bei Umkehrung der Strömungsrichtung von einer Durchströmrichtung in eine Sperrrichtung und öffnet ebenfalls selbsttätig bei Umkehrung der Strömungsrichtung von einer Sperrrichtung auf eine Durchströmrichtung.

Gemäß der Erfindung ist vorzugsweise vorgesehen, dass die RV-Patrone in einer Orientierung in den Aufnahmeraum eingesetzt ist, in welcher eine durch die RV-Patrone definierte Sperrrichtung von der RV-Patrone zur Mündung weist. Von Vorteil ist dabei, dass die RV-Patrone somit bei Anströmung bei Sperrrichtung selbsttätig gegen das Einsetzteil gedrückt wird und auf diese Weise die Schnapp- oder Rastverbindung arretiert und sichert.

Die Erfindung kann mit Vorteil eingesetzt werden bei einer Schlauchanordnung der eingangs genannten Art, bei welcher der Schlauchnippel wie beschrieben erfindungsgemäß ausgebildet ist. Die erfindungsgemäße Schlauchanordnung ermöglicht somit, den Schlauchnippel je nach den gewünschten Anforderungen und Funktionalitäten flexibel auszustatten, ohne dass die Grundgestalt des Nippelgrundkörpers des Schlauchnippels geändert werden muss. Dieser kann in einem für alle vorgesehenen Anwendungsfälle einheitlichen Herstellungsverfahren gefertigt werden.

Die Erfindung wird nun anhand von Ausführungsbeispielen näher beschrieben, ist jedoch nicht auf diese Ausführungsbeispiele beschränkt. Weitere Ausführungsbeispiele ergeben sich durch Kombination einzelner oder mehrerer Merkmale der Schutzansprüche untereinander und/oder mit einzelnen oder mehreren Merkmalen der Ausführungsbeispiele.

Es zeigt:
- Fig. 1: eine Schlauchanordnung nach dem Stand der Technik mit elastischem Dichtungsring,
- Fig. 2: eine Schlauchanordnung nach dem Stand der Technik mit nicht-elastischem Dichtungsring,
- Fig. 3: die Schlauchanordnung gemäß Fig. 2 mit montiertem Dichtungsring,
- Fig. 4: eine erfindungsgemäße Schlauchanordnung in teilweise aufgeschnittener Darstellung mit einem nicht-elastischem Dichtungsring.
- Fig. 5: die erfindungsgemäße Schlauchanordnung gemäß Fig. 4 mit einem elastischem Dichtungsring,
- Fig. 6: eine Detailansicht aus Fig. 4,
- Fig. 7: ein Schlauchanschlussstück einer weiteren erfindungsgemäßen Schlauchanordnung in teilweise aufgeschnittener Darstellung,
- Fig. 8: eine Detailansicht aus Fig. 7 und
- Fig. 9: eine Detailansicht einer weiteren erfindungsgemäßen Schlauchanordnung mit einem gegenüber Fig. 6 nicht vollständig umlaufenden, sondern durch Längsschlitze unterbrochenen Einsetzteil.

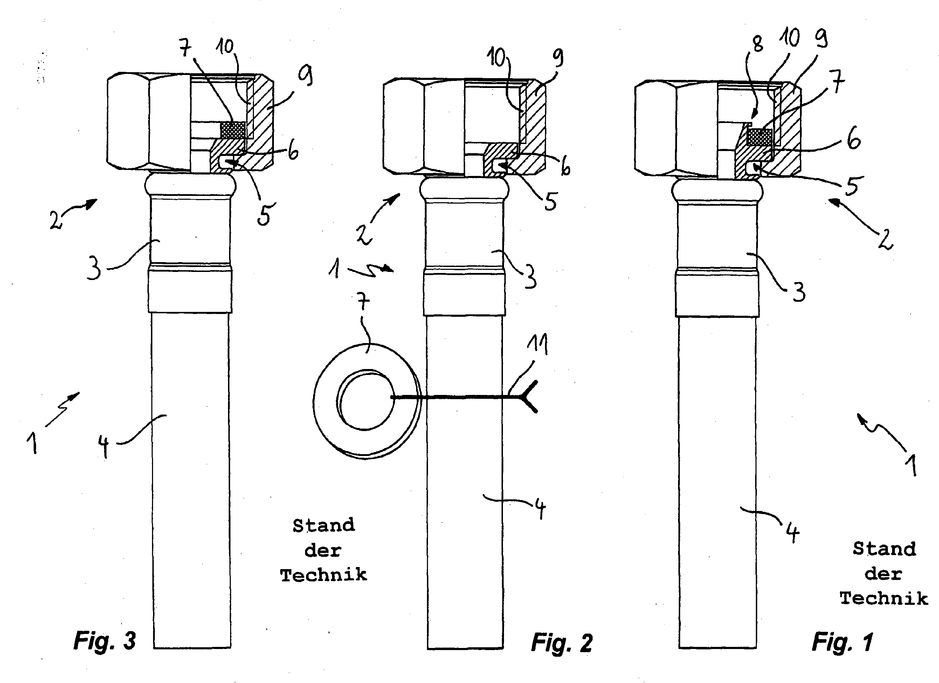

Eine in Fig. 1 im Ganzen mit 1 bezeichnete, bekannte Schlauchanordnung hat ein Schlauchanschlussstück 2, welches mit einer Quetschhülse 3 an einem Druckschlauch 4 befestigt ist.

Das Schlauchanschlussstück 2 hat einen Schlauchnippel 5, auf dessen Anlageflansch 6 ein Dichtungsring 7 aufgelegt ist. Der einstückige Schlauchnippel 5 durchgreift den Dichtungsring 7, und am mündungsseitigen Ende ist ein in Umfangsrichtung umlaufender Kragen 8 ausgebildet, welcher den Dichtungsring 7 hintergreift und axial hält.

Der Dichtungsring 7 besteht aus elastischem Material und wird zur Montage über den Kragen 8 gezogen, indem der Innendurchmesser des Dichtungsrings 7 vorübergehend elastisch vergrößert wird.

Das Schlauchanschlussstück 2 hat ein als Mutter ausgebildetes Anschlusselement 9 mit einem Innengewinde 10 zum Anschluss an ein nicht weiter dargestelltes wasserführendes System.

Wird das Anschlusselement 9 beim Anschluss der Schlauchanordnung 1 zu fest angezogen, so besteht die Gefahr, dass der elastische Dichtungsring 7 abgeschert oder zerschnitten wird.

Um dies zu vermeiden, werden bei anderen bekannten Schlauchanordnungen 1 gemäß Fig. 2 die Dichtungsringe 7 aus einem nicht-elastischem Material gefertigt. Diese bekannten Schlauchanordnungen 1 werden mit separatem Dichtungsring 7 ausgeliefert, welcher mit einem Draht 11 an dem Druckschlauch 4 befestigt sind.

Zum Gebrauch wird der Dichtungsring 7 - wie in Fig. 3 gezeigt - auf den Anlageflansch 6 gelegt. Da der Dichtungsring 7 nicht elastisch ist, darf der Schlauchnippel 5 in diesem Fall keinen Kragen 8 aufweisen.

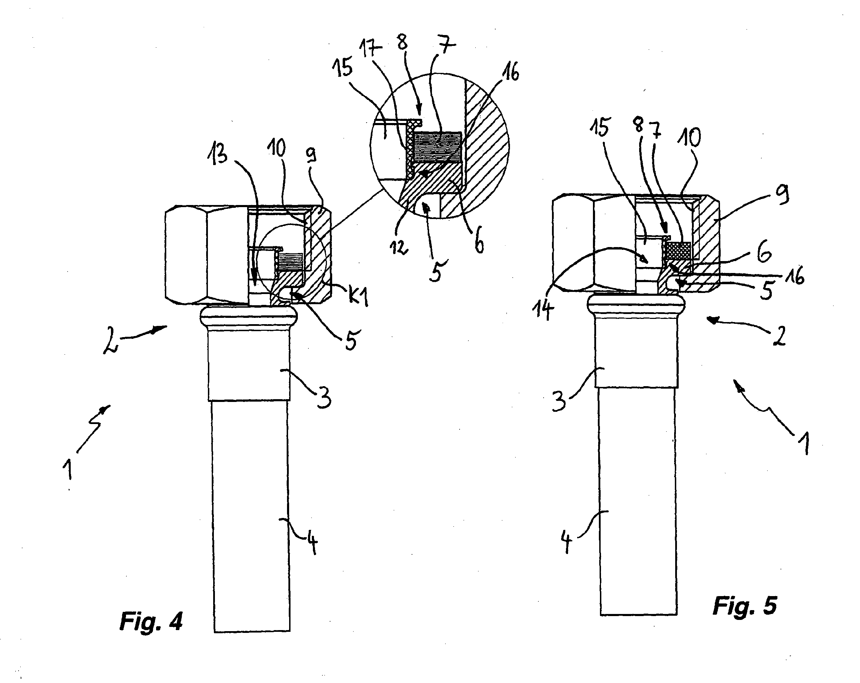

Fig. 4 und Fig. 5 zeigen eine erfindungsgemäße Schlauchanordnung 1, welche die vorgestellten Anwendungsfälle eines elastischen und eines nicht-elastischen Dichtungsring 7 durch einen einheitlichen konstruktiven Aufbau abdeckt.

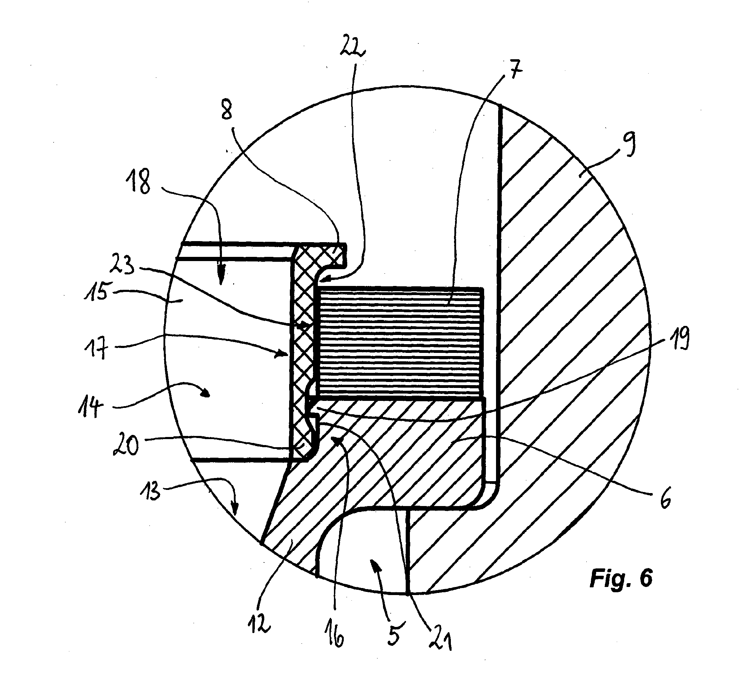

Fig. 6 zeigt das in Fig. 4 durch den Kreis K1 gekennzeichnete Detail in einer Vergrößerung.

Die Schlauchanordnung 1 gemäß Fig. 4 bis 6 hat eine Schlauchanschlussstück 2, a welches mit einer Quetschhülse 3 kraft- und formschlüssig an einem Druckschlauch 4 befestigt ist. Die Quetschhülse 3 ist hierzu vercrimpt.

Das Schlauchanschlussstück 2 hat einen Schlauchnippel 5, welcher in den Druckschlauch 4 teilweise eingeführt ist.

Der Schlauchnippel 5 weist einen Nippelgrundkörper 12 auf, welcher einen Durchströmkanal 13 zur Durchleitung der Flüssigkeit des wasserführenden Systems in den und aus dem Druckschlauch 4 bildet.

An dem vom Druckschlauch 4 abgewandten axialen Ende des Nippelgrundkörpers 12 ist eine Mündung 14 des Durchströmkanals 13 gebildet, welche mit dem als Mutter ausgebildeten Anschlusselement 9 an ein weiteres, nicht dargestelltes wasserführendes System angeschlossen werden kann.

Im Ausführungsbeispiel ist das Anschlusselement 9 als Mutter mit Innengewinde 10 dargestellt, es können jedoch auch andere Anschlusselemente, beispielsweise mit Außengewinde, am Schlauchnippel 5 angeordnet oder befestigt sein oder an dem Schlauchnippel 5 angreifen.

An dem Nippelgrundkörper 12 ist mündungsseitig ein um die Mündung 14 ringförmig umlaufender Anlageflansch 6 angeformt, welcher an einen entsprechenden Gegenflansch des Weiteren wasserführenden Systems angeschlossen wird.

Zum dichten Abschluss der Verbindung des Schlauchanschlussstücks 2 mit dem weiteren wasserführenden System über den Anlageflansch 6 ist ein Dichtungsring 7 auf den Auflageflansch 6 aufgelegt.

Der Dichtungsring 7 erstreckt sich ebenfalls vollständig umlaufend um die Mündung 14.

Im gezeigten Ausführungsbeispiel weisen die Dichtungsringe 7 einen rechteckigen Querschnitt auf, es sind jedoch auch andere Querschnitte, beispielsweise runde Querschnitte, möglich.

In Fig. 4 ist ein nicht-elastischer Dichtungsring 7 gezeigt, welcher aus einem Faserverbundwerkstoff gefertigt ist.

Fig. 5 zeigt dagegen die Schlauchanordnung 1 mit einem elastischem Dichtungsring 7, welcher aus Gummi gefertigt ist.

Der Dichtungsring 7 wird sowohl bei Fig. 4 als auch bei Fig. 5 durch einen Kragen 8 in axialer Richtung auf dem Schlauchnippel 5 gehalten, indem der Kragen 8 den Dichtungsring 7 hintergreift.

Der Kragen 8 ist an einem hülsenförmigen Einsetzteil 15 ausgebildet, welches über eine Schnapp- oder Rastverbindung 16 an seinem schlauchseitigen axialen Ende mit dem Nippelgrundkörper 12 des Schlauchnippels 5 verbunden ist.

Das hülsenförmige Einsetzteil 15 weist eine zylindrische Innenfläche 17 auf, mit welcher es eine Durchlassöffnung 18 bildet. Bei weiteren Ausführungsbeispielen kann die Innenfläche 17 auch im Radialquerschnitt polygonförmig ausgebildet sein.

Die Durchlassöffnung 18 setzt sich über die Mündung 14 in den Durchströmkanal 13 fort.

Das Einsetzteil 15 umschließt zumindest bereichsweise und insbesondere vollständig oder mit mindestens einer vollständigen oder partiellen Unterbrechung, die vorzugsweise als Längsschlitz ausgebildet ist, die Mündung 14 des Durchströmkanals 13.

An der Mündung 14 des Nippelgrundkörpers 12 ist innenseitig ein ringförmiger, radial nach innen abstehender Vorsprung 19 ausgebildet, in welchen das Einsetzteil 15 eingesetzt ist.

An dem Einsetzteil 15 ist eine Rastnase 20 ausgebildet, welche in der in Fig. 6 im Detail gezeigten Gebrauchsstellung den Vorsprung 19 hintergreift, wodurch die Schnapp- oder Rastverbindung 16 gebildet ist.

Die Rastnase 20 ist entlang des Umfangs des Einsetzteils 15 außenseitig vollständig umlaufend ausgebildet.

Bei weiteren Ausführungsbeispielen sind mehrere Rastnasen 20 entlang des Umfangs des Einsetzteils 15 ausgebildet, die sich segmentartig erstrecken und die in Umfangsrichtung voneinander beabstandet angeordnet sind.

Bei weiteren Ausführungsbeispielen sind die Rastnasen 20 an entsprechenden, axial ausgerichteten Fingern angeordnet, wobei in das Einsetzteil 15 radiale Schnitte zur Ausbildung dieser Finger eingebracht sind.

Durch den ringförmig umlaufenden und nach innen abragenden Vorsprung 19 ist innenseitig an dem Nippelgrundkörper 12 eine Rastnasenaufnahme 21 in Form einer ebenfalls ringförmig umlaufenden Nut ausgebildet, in welche die Rastnase 20 eingreift und einrastet beziehungsweise einschnappt.

Der Nippelgrundkörper 12 ist aus einem metallischen Werkstoff durch Drehbearbeitung gefertigt, während das Einsetzteil 15 aus einem Kunststoff gebildet ist.

Das Einsetzteil 15 weist an seiner radialen Außenseite eine zylindrische Anlagefläche 22 auf, welche in ihrem Außendurchmesser derart auf den Dichtungsring 7 abgestimmt ist, dass dessen ebenfalls zylindrische radiale Innenfläche 23 an der Anlagefläche 22 anliegt. Der Dichtungsring 7 ist somit gegen Verschiebungen in radialer Richtung durch das Einsetzteil 15 auf dem Anlageflansch 6 festgelegt.

Die Außenabmessung des Einsetzteils 15 ist - abgesehen von dem hintergreifenden Kragen 8 - durch den Außendurchmesser der Anlagefläche 12 derart bestimmt oder begrenzt, dass der Dichtungsring 7 auf das Einsetzteil 15 ohne Deformation aufsteckbar ist, bevor das Einsetzteil 15 in den Nippelgrundkörper 12 eingesetzt wird.

Die Rastnase 20 und die Rastnasenaufnahme 21 können in Ihrer Form und ihren jeweiligen Durchmessern so aufeinander abgestimmt werden, dass das Einsetzteil 15 nach einem Einschnappen der Schnapp- oder Rastverbindung 16 nicht mehr oder nur mit einem zusätzlichem Werkzeug ohne Zerstörung des Einsetzteils 15 lösbar ist.

Beispielsweise können hierzu entsprechende Schrägungen und Hinterschnitte an dem Vorsprung 19 ausgebildet sein.

Das Einsetzteil 15 ist ringförmig ausgebildet, wobei die Innenfläche 17 bei den Fig. 4 bis 6 eine Zylinderform aufweist. Bei weiteren Ausführungsbeispielen kann das ringförmige Einsetzteil 15 eine Innenfläche 17 aufweisen, die im Radialschnitt polygonförmig ist. Die Polygonform kann sich hierbei aus einem vorzugsweise regelmäßigen Vieleck mit geraden oder (kreis-) bogenförmig gekrümmten Kanten ergeben, dessen konvexe und/oder konkave Ecken abgerundet ausgeführt sind.

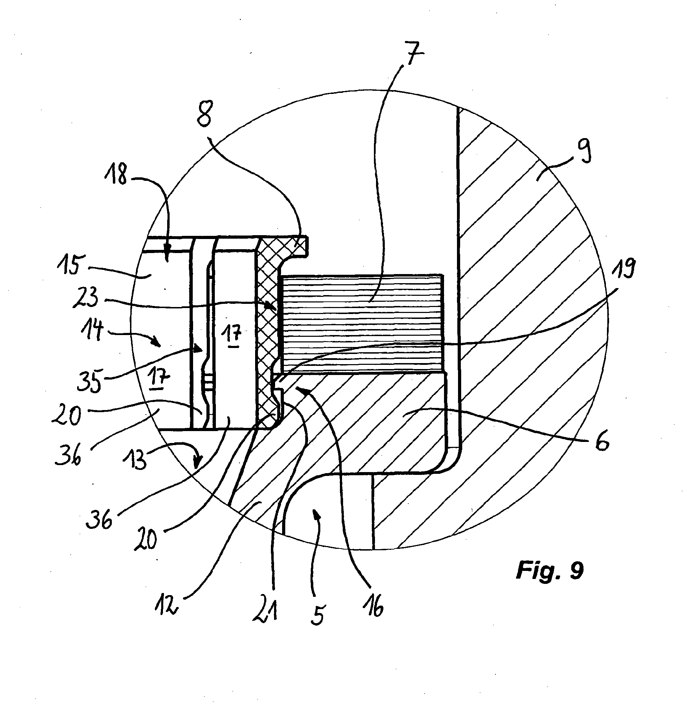

Fig. 9 zeigt ein weiteres erfindungsgemäßes Ausführungsbeispiel, welches analog zu dem Ausführungsbeispiel gemäß Fig. 4 bis 6 ausgebildet ist. Funktionell oder konstruktiv gleiche Bauteile oder Einzelheiten sind daher mit denselben Bezugszeichen gekennzeichnet und nicht noch einmal gesondert beschrieben.

Das Ausführungsbeispiel gemäß Fig. 9 unterscheidet sich von dem Ausführungsbeispiel gemäß Fig. 4 bis 6 durch die Form des Einsetzteils 15. Dieses Einsetzteil 15 weist wenigstens einen Längsschlitz 35 auf, welcher sich in axialer Richtung am Einsetzteil 15 erstreckt. Das Einsetzteil 15 gemäß Fig. 4 bis 6 ist hingegen durchgängig umlaufend ausgebildet.

Vorzugsweise sind mehrere solche Längsschlitze 35 in Umfangsrichtung versetzt an dem Einsetzteil 15 ausgebildet, die in Fig. 9 nicht weiter ersichtlich sind. Es ergibt sich somit eine von einem Axialende her geschlitzte Form des Einsetzteils 15.

Im Ausführungsbeispiel erstrecken sich die Längsschlitze 35 über die gesamte Axiallänge des Einsetzteils 15, bei weiteren Ausführungsbeispielen erstrecken sich die Längsschlitze 35 über einen Teil der Axiallänge des Einsetzteils 15.

Durch die Längsschlitze 35 wird die Innenfläche 17 des Einsetzteils 15 unterbrochen, wodurch Finger 36 gebildet sind. Die Finger 36 tragen an ihren freien Enden die Rastnasen 20.

Die Finger 36 sind an ihrem von den Rastnasen 20 abgewandeten Axialende durch eine ringförmige Struktur, welche zumindest den ringförmigen Kragen 8 umfasst, miteinander verbunden.

Die Finger 36 erzeugen eine sprengringartige Federwirkung.

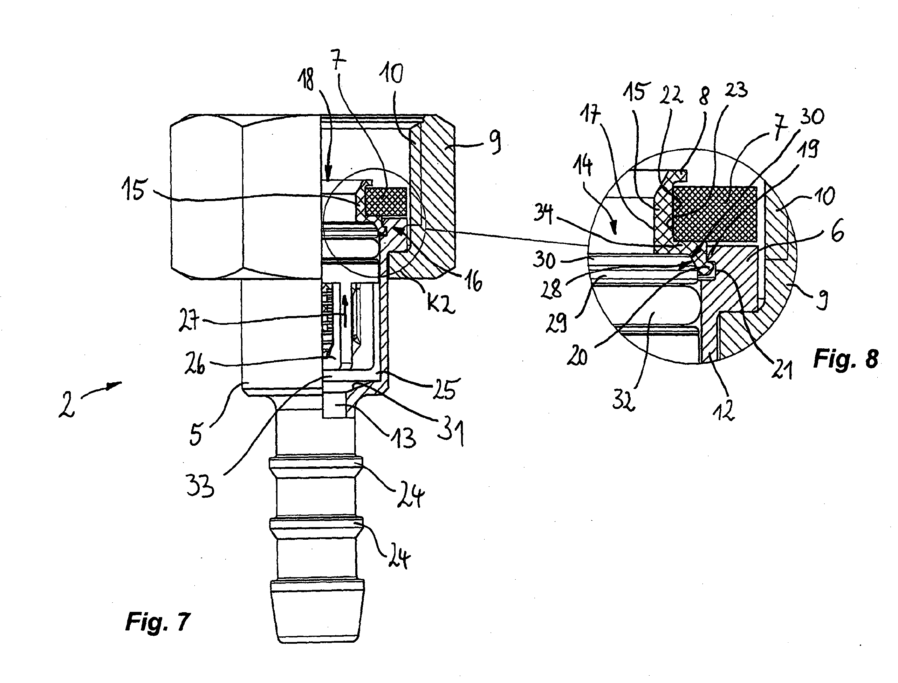

Fig. 7 und 8 zeigen ein weiteres Ausführungsbeispiel der Erfindung.

Bei diesem Ausführungsbeispiel sind funktionell oder konstruktiv gleichartige Bauteile und Einzelheiten mit denselben Bezugszeichen wie bei Fig. 4 bis 6 bezeichnet und nicht noch einmal gesondert beschrieben.

In den Fig. 7 und 8, wobei die Fig. 8 eine Vergrößerung der durch den Kreis K2 in Fig. 7 gekennzeichneten Einzelheit darstellt, ist das Schlauchanschlussstück 2 ohne aufgeschobenen Druckschlauch 4 und ohne Quetschhülse 3 gezeigt.

Deutlich sind daher die in den Fig. 4 bis 6 durch den Druckschlauch 4 verdeckten Halterippen 24 am Schlauchnippel 5 erkennbar, welche zusammen mit der vercrimpten Quetschhülse 3 den kraft- und formschlüssigen Halt des Druckschlauchs 4 auf dem Schlauchanschlussstück 2 bewirken.

In dem Nippelgrundkörper 12 des Schlauchnippels 5 ist an der Mündung 14 des Durchströmkanals 13 ein Aufnahmeraum 25 ausgebildet.

Der Aufnahmeraum 25 weist eine zylindrische Innenkontur auf, so dass eine RV(Rückflussverhinderer)-Patrone 26 in den Aufnahmeraum 25 herausnehmbar einsetzbar ist.

Die RV-Patrone 26 wird gegen ein Herausfallen oder Herausrutschen aus dem Aufnahmeraum 25 axial durch das Einsetzteil 15 gehalten, welches in der zu Fig. 4 bis 6 beschriebenen Weise über eine Schnapp- oder Rastverbindung 16 mit dem Nippelgrundkörper 12 verbunden ist.

Die RV-Patrone 26 ist derart in den Aufnahmeraum 25 eingesetzt, dass die Sperrrichtung 27 der RV-Patrone 26 zur Mündung 14 des Durchströmkanals 13 in die Durchlassöffnung 18 und zum Einsetzteil 15 zeigt.

Das Einsetzteil 15 ist hierbei so geformt, dass die in Sperrrichtung 27 aus dem Durchströmkanal 13 beaufschlagte RV-Patrone 26 die Schnapp- oder Rastverbindung 16 arretiert.

Hierzu ist innenseitig radial gegenüber der außenseitigen Rastnase 20 eine konische Schrägfläche 28 ausgebildet, welche die Mündung 14 in Umfangsrichtung umläuft.

An dem Auflagering 29 der RV-Patrone 26 ist eine Gegenfläche 30 ausgebildet, welche zu dem Schrägungswinkel der Schrägfläche 28 derart korrespondiert, dass eine von der RV-Patrone 26 in Sperrrichtung entwickelte axial gerichtete Kraft in eine radial nach außen gerichtete Beaufschlagung der Rastnase 20 umgelenkt wird. Hierdurch wird die Rastnase 20 in die Rastnasenaufnahme 21 gedrückt, so dass die Schnapp- oder Rastverbindung 16 nicht mehr lösbar, sondern selbstverstärkend arretiert ist.

Die konische Schrägfläche 28 am Einsetzteil 15 ist hierbei so ausgebildet, dass sie an ihrem axial der RV-Patrone 26 zugewandten Ende einen größeren (Innen-)Durchmesser aufweist als der Auflagering 29 der RV-Patrone, während die Schrägfläche 28 an ihrem axial von der RV-Patrone 26 abgewandten Ende einen Durchmesser bildet, welcher kleiner als der größte Außendurchmesser der RV-Patrone 26 am Auflagering 29 ist.

An dem zum Druckschlauch 4 und den Halterippen 24 zugewandten axialen Ende des Aufnahmeraums 25 bildet der Durchströmkanal 13 eine Durchmesserverengung 31 vom Innendurchmesser des zylindrischen Aufnahmeraums 25 auf den kleineren Durchmesser der ebenfalls zylindrischen Bohrung des übrigen Durchströmkanals 13, wodurch die RV-Patrone 26 in Durchströmrichtung, also in der zu der Sperrrichtung 27 entgegengesetzten Richtung, axial gehalten wird.

Ein Dichtungsring 32 dichtet den Zwischenraum zwischen der RV-Patrone 26 und der Innenwand des Aufnahmeraums 25 ab, so dass die Flüssigkeit in Durchströmrichtung durch die RV-Patrone 26 geleitet wird, während in Sperrrichtung 27 der Durchströmkanal 13 verschlossen ist.

Die axiale Länge der RV-Patrone 26 ist so auf die axiale Länge des Aufnahmeraums 25 bestimmt, dass bei eingesetzter RV-Patrone 26 ein axiales Spiel 33 verbleibt, welches eine axiale Verschiebung der RV-Patrone 26 beim Wechsel zwischen einem Betrieb in Durchströmöffnung und einem Betrieb in Sperrrichtung 27 erlaubt.

Auf diese Weise wird erreicht, dass die RV-Patrone 26 das Einsetzteil 15 nur bei einem Betrieb in Sperrrichtung 27 beaufschlagt, so dass die Schnapp- oder Rastverbindung 16 durch die RV-Patrone 26 nur bei einem Betrieb in der Sperrrichtung 27 arretiert ist.

Bei den in den Fig. 7 und 8 gezeigten Beispielen ist der Dichtungsring 7 aus einem elastischem Material, beispielsweise Gummi, gefertigt, so dass der Dichtungsring 7 über den radial in Bezug auf die Anlagefläche 22 überstehenden Kragen 8 gezogen werden kann.

In montierter Position, die in den Fig. 7 und 8 gezeigt ist, wird der Dichtungsring 7 durch den Kragen 8 und eine am entgegengesetzten axialen Ende der Anlagefläche 22 ausgebildete Schulter axial gesichert.

Bei dem Schlauchanschlussstück 2 wird vorgeschlagen, im Bereich der Mündung 14 des von einem Schlauchnippel 5 des Schlauchanschlussstücks 2 gebildeten Durchströmkanals 13 ein hülsenförmiges Einsetzteil 15 anzuordnen und mit einer Schnapp- oder Rastverbindung 16 an dem Nippelgrundkörper 12 des Schlauchnippels 5 zu befestigen. Hierbei kann das Einsetzteil 15 einen Dichtungsring 7 für den Anlageflansch 6 des Schlauchnippels 5 tragen und/oder eine in einen Aufnahmeraum 25 des Schlauchnippels 5 eingesetzte RV-Patrone 26 axial sichern.

## Patentansprüche

1. Schlauchnippel (5), mit einem einen Durchströmkanal (13) aufweisenden Nippelgrundkörper (12), an welchem eine Mündung (14) zum Anschluss an ein wasserführende System ausgebildet ist, wobei an dem Nippelgrundkörper (12) des schlauchnippels (5) ein um die Mündung (14) umlaufender Anlageflansch (6) angeformt ist, und mit einem Dichtungsring (7) zur Abdichtung des Anlageflansches (6), wobei der Dichtungsring (7) an einem den Dichtungsring, (7) hintergreifenden Kragen (8) des Schlauchnippels (5) gehalten ist, **dadurch gekennzeichnet, dass** der Kragen (B) an einem hülsenförmigen Einsetzteil (15) ausgebildet ist, dass das hülsenförmigen Einsetzteil (15) die Ringöffnung des Dichtungsringes (7) durchsetzt, und dass das Einsetzteil (15) über eine Schnapp- oder Rastverbindung (16) mit dem Nippelgrundkörper (12) verbunden ist.

2. Schlauchnippel (5) nach Anspruch 1, **dadurch gekennzeichnet, dass** das Einsetzteil (15) eine Durchlassöffnung (18) zur Mündung (14) des Durchströmkanals (13) des Nippelgrundkörpers (12) bildet und/oder ringförmig umschließt.

3. Schlauchnippel (5) nach Anspruch 1 oder 2, **dadurch gekennzeichnet, dass** das Einsetzteil (15) wenigstens eine Rastnase (20) aufweist, welche in Gebrauchsstellung in wenigstens eine Rastnasenaufnahme (21) an dem Nippelgrundkörper (12) eingreift, und/oder dass die Rastnase (20) an dem Einsetzteil (15) um die Mündung (14) und/oder die Durchlassöffnung (18) durchgehend umlaufend ausgebildet ist.

4. Schlauchnippel (5) nach einem der Ansprüche 1 bis 3, **dadurch gekennzeichnet, dass** das Einsetzteil (15) zumindest im Bereich der Schnapp- oder Rastverbindung (16) aus einem elastischen Material gefertigt ist und/oder dass der Nippelgrundkörper (12) aus einem metallischen Werkstoff gefertigt ist und/oder dass der Dichtungsring (7) aus einem unelastischen Materialgefertigt ist.

5. Schlauchnippel (5) nach Anspruch 4, **dadurch gekennzeichnet, dass** das Einsetzteil (15) zumindest im Bereich der Schnapp- oder Rastverbindung (16) aus einem Kunststoff, beispielsweise aus einem Thermoplast oder aus einem Duroplast oder aus einem thermoplastischen Elastomer gefertigt ist.

6. Schlauchnippel (5), nach Anspruch 4 oder 5, **dadurch gekennzeichnet, dass** der Nippelgrundkörper (12) aus Messing oder Kupfer oder Stahl oder einer Legierung mit wenigstens einem dieser Werkstoffe gefertigt ist.

7. Schlauchnippel (5) nach einem der Ansprüche 4 bis 6, da durch gekennzeichnet, dass der Dichtungsring (7) aus einem Faserverbundwerkstoff gefertigt ist.

8. Schlauchnippel (5) nach einem der Ansprüche 1 bis 7, **dadurch gekennzeichnet, dass** das Einsetzteil eine außenseitige, vorzugsweise radial orientierte und/oder zylindrische, Anlagefläche (22) aufweist, an welcher der Dichtungsring (7) in Gebrauchsstellung mit seiner Innenfläche (23) anliegt, und/oder dass der Dichtungsring (7) vor der Herstellung der Schnapp- oder Rastverbindung (16) ohne eine Deformation von einer Seite auf das Einsetzteil (15) aufsteckbar ist.

9. Schlauchnippel (5), insbesondere nach einem der Ansprüche 1 bis 8, mit einem einen Durchströmkanal (13) aufweisenden Nippelgrundkörper (12), an welchem eine Mündung (14) zum Anschluss an ein wasserführendes System ausgebildet ist, wobei an dem Nippelgrundkörper (12) des Schlauchnippels (5) ein um die Mündung (14) umlaufender Anlageflanech (6) angeformt ist, **dadurch gekennzeichnet, dass** in dem Durchströmkanal (12) des Schlauchnippels (5) an dem Nippelgrundkörper (12) ein Aufnahmeraum (25) ausgebildet ist, in welchen Aufnahmeraum (25) eine im Gebrauch durchströmte RV-Patrane (26) herausnehmbar eingesetzt ist, und dass an der Mündung (14) ein hülsenförmiges Einsetzteil (15) über eine Schnapp- oder Rastverbindung (16) mit dem Nippelgrundkörper (12) verbunden ist, welches die eingesetzte RV-Patrone (26) im Aufnahmeraum (25) hält, wobei die RV-Patrone (26) in Sperrrichtung (27) die Schnapp- oder Rastverbindung (16) arretiert.

10. Schlauchnippel (5) nach einem der Ansprüche 1 bis 9, **dadurch gekennzeichnet, dass** der Aufnahmeraum (25) an seinem von der Mündung (14) abgewandten Ende über eine Durchmesserverengung (31) in den übrigen Durchströmkanal (13) übergeht.

11. Schlauchnippel (5) nach Anspruch 9 oder 10, **dadurch gekennzeichnet, dass** an dem hülsenförmigen Einsetzteil (15) außenseitig wenigstens eine Rastnase (20) ausgebildet ist, welche in Gebrauchsstellung in eine an dem Nippelgrundkörper (12) ausgebildete Rastnasenaufnahme (21), eingreift, und dass an dem hülsenförmigen Einsetzteil (15) im Bereich der, wenigstens einen Rastnase (20) innenseitig eine vorzugsweise konische Schrägfläche (28) ausgebildet ist, welche vom Aufnahmeraum gesehen eine Durchmesserverengung von einem ersten Durchmesse auf einen zweiten Durchmesser bildet, wobei der erste Durchmesser größer als ein Außendurchmesser der RV-Patrone (26) ist und der zweite Durchmesser kleiner als der Außendurchmesser der RV-Patrone (26) ist.

12. Schlauchnippel (5) nach einem der Ansprüche 9 bis 11, **dadurch gekennzeichnet, dass** die RV-Patrone (26) die innenseitige Schrägfläche (28) des hülsenförmigen Einsetzteiles (15) in Sperrrichtung (27) derart beaufschlagt, dass die wenigstens eine Rastnase radial in der Rastnasenaufnahme (21) fixiert ist, und/oder dass an der RV-Patrone (26) radial außenseitig eine Gegenschrägfläche (30) ausgebildet ist, welcher mit der oder einer innenseitigen Schrägfläche (28) des Einsetzteils (15) derart zusammenwirkt, dass eine axiale Beaufschlagung der RV-Patrone (26) in eine radial nach außen gerichtete Beaufschlagung einer an dem Einsetzteil (15) außenseitig ausgebildeten Rastnase (20) umgesetzt ist.

13. Schlauchnippels (5) nach einem der Ansprüche 1 bis 12, **dadurch gekennzeichnet, dass** die oder eine Anlagefläche (25) des Einsetzteiles (15) in axialer Richtung beidseitig durch Kragen (8) oder Schultern (34) begrenzt ist und/oder dass die RV-Patrone. (26) in einer Orientierung in den Aufnahmeraum (25) eingesetzt ist, in welcher eine durch die RV-Patrone (26) definierte Sperrrichtung (27) von der RV-Patrone (26) zur Mündung (14) weist.

14. schlauchnippel (5) für ein wasserführendes System, umfassend ein Schlauchanschlussstück (2) mit einem Schlauchnippel (5) nach einem der vorangehenden Ansprüche und mit einem an dem Schlauchnippel (5) gehaltenen Anschlusselement (9) zum lösbaren Anschluss an das wasserführende System und weiter umfassend einen Druckschlauch (4), welcher an dem Schlauchnippel (5) mit einer Quetschhülse (3) kraft- und/oder formschlüssig befestigt ist.

## Claims

1. Hose nipple (5), comprising a nipple main body (12) which comprises a through-flow channel (13) and on which a mouth (14) for connecting to a water-bearing system is formed, wherein a contact flange (6) which extends around the mouth (14) is integrally formed on the nipple main body (12) of the hose nipple (5), and comprising a sealing ring (7) for sealing the contact flange (6), wherein the sealing ring (7) is held on a collar (8) of the hose nipple (5) which engages behind the sealing ring (7), **characterised in that** the collar (8) is formed on a sleeve-shaped insert part (15), that the sleeve-shaped insert part (15) penetrates the annular opening of the sealing ring (7) and that the insert part (15) is connected to the nipple main body (12) by a snap or latch connection (16).

2. Hose nipple (5) as claimed in claim 1, **characterised in that** the insert part (15) forms and/or annularly surrounds a through-opening (18) to the mouth (14) of the through-flow channel (13) of the nipple main body (12).

3. Hose nipple (5) as claimed in claim 1 or 2, **characterised in that** the insert part (15) comprises at least one latching lug (20) which, in the usage position, engages into at least one latching lug receiver (21) on the nipple main body (12), and/or that the latching lug (20) is formed on the insert part (15) so as to extend continuously around the mouth (14) and/or the through-opening (18).

4. Hose nipple (5) as claimed in any one of claims 1 to 3, **characterised in that** the insert part (15) is produced, at least in the region of the snap or latch connection (16), from an elastic material and/or that the nipple main body (12) is produced from a metallic material and/or that the sealing ring (7) is produced from an inelastic material.

5. Hose nipple (5) as claimed in claim 4, **characterised in that** the insert part (15) is produced, at least in the region of the snap or latch connection (16), from a synthetic material, e.g. from a thermoplastic or from a thermosetting material or from a thermoplastic elastomer.

6. Hose nipple (5) as claimed in claim 4 or 5, **characterised in that** the nipple main body (12) is produced from brass or copper or steel or an alloy having at least one of these materials.

7. Hose nipple (5) as claimed in any one of claims 4 to 6, **characterised in that** the sealing ring (7) is produced from a fibre composite.

8. Hose nipple (5) as claimed in any one of claims 1 to 7, **characterised in that** the insert part has an outer, preferably radially oriented and/or cylindrical bearing surface (22), against which the sealing ring (7) abuts with its inner surface (23) in the usage position, and/or that the sealing ring (7) can be placed onto the insert part (15) from one side without any deformation prior to production of the snap or latch connection (16).

9. Hose nipple (5), in particular as claimed in any one of claims 1 to 8, comprising a nipple main body (12) which has a flow-through channel (13) and on which a mouth (14) for connecting to a water-bearing system is formed, wherein a contact flange (6) which extends around the mouth (14) is integrally formed on the nipple main body (12) of the hose nipple (5), **characterised in that** a receiving space (25) is formed in the through-flow channel (12) of the hose nipple (5) on the nipple main body (12), into which receiving space (25) a backflow preventer cartridge (26), through which a flow passes in use, is removably inserted, and that at the mouth (14) a sleeve-shaped insert part (15) is connected to the nipple main body (12) by a snap or latch connection (16), which insert part holds the inserted backflow preventer cartridge (26) in the receiving space (25), wherein the backflow preventer cartridge (26) locks the snap or latch connection (16) in the blocking direction (27).

10. Hose nipple (5) as claimed in any one of claims 1 to 9, **characterised in that** at its end facing away from the mouth (14), the receiving space (25) merges into the remaining through-flow channel (13) by means of a narrowed diameter portion (31).

11. Hose nipple (5) as claimed in claim 9 or 10, **characterised in that** at least one latching lug (20) which, in a usage position, engages into a latching lug receiver (21) formed on the nipple main body (12), is formed on the outer side of the of the sleeve-shaped insert part (15), and that a preferably conical oblique surface (28) which, when viewed from the receiving space, forms a narrowed diameter portion from a first diameter to a second diameter, is formed on the inner side of the sleeve-shaped insert part (15) in the region of the at least one latching lug (20), wherein the first diameter is greater than an outer diameter of the backflow preventer cartridge (26) and the second diameter is smaller than the outer diameter of the backflow preventer cartridge (26).

12. Hose nipple (5) as claimed in any one of claims 9 to 11, **characterised in that** the backflow preventer cartridge (26) acts upon the inner-side oblique surface (28) of the sleeve-shaped insert part (15) in the blocking direction (27) such that the at least one latching lug is fixed radially in the latching lug receiver (21), and/or that formed radially on the outer side of the backflow preventer cartridge (26) is a counter oblique surface (30) which interacts with the or a inner-side oblique surface (28) of the insert part (15) such that an axial application of force to the backflow preventer cartridge (26) is converted into a radially outwardly directed application of force to a latching lug (20) formed on the outer side of the insert part (15).

13. Hose nipple (5) as claimed in any one of claims 1 to 12, **characterised in that** the or a bearing surface (25) of the insert part (15) is delimited on both sides in the axial direction by collars (8) or shoulders (34), and/or that the backflow preventer cartridge (26) is inserted into the receiving space (25) in an orientation in which a blocking direction (27) which is defined by the backflow preventer cartridge (26) points from the backflow preventer cartridge (26) to the mouth (14).

14. Hose nipple (5) for a water-bearing system, comprising a hose connecting piece (2) having a hose nipple (5) as claimed in any one of the preceding claims, and having a connection element (9) which is held on the hose nipple (5) for releasably connecting to the water-bearing system and further comprising a pressure hose (4) which is attached to the hose nipple (5) in a force-fitting and/or form-fitting manner by a crimping sleeve (3).

## Revendications

1. Raccord de tuyau (5) comportant un corps de base (12) présentant un canal d'écoulement (13), corps sur lequel est aménagée une embouchure (14) pour le raccord sur un système de conduction d'eau, une bride d'appui (6), faisant le tour de l'embouchure (14), étant aménagée sur le corps du base (12) du raccord de tuyau (5), et un joint d'étanchéité (7) pour l'étanchéité de la bride d'appui (6), le joint d'étanchéité (7) étant maintenu sur une collerette (8) du raccord de tuyau (5) qui saisit le joint d'étanchéité (7) par l'arrière, **caractérisé en ce que** la collerette (8) est aménagée sur une pièce d'insertion (15) en forme de manchon, **en ce que** la pièce d'insertion (15) en forme de manchon traverse l'ouverture circulaire du joint d'étanchéité (7), et **en ce que** la pièce d'insertion (15) est reliée au corps de base (12) du raccord par liaison à encliquetage ou à crans (16).

2. Raccord de tuyau (5) selon la revendication 1, **caractérisé en ce que** la pièce d'insertion (15) forme une ouverture de passage (18) vers l'embouchure (14) du canal d'écoulement (13) du corps de base (12) du raccord et/ou l'entoure telle une bague.

3. Raccord de tuyau (5) selon la revendication 1 ou la revendication 2, **caractérisé en ce que** la pièce d'insertion (15) présente au moins un ergot (20) lequel s'engrène, en position d'usage, dans au moins un logement d'ergot (21) sur le corps de base (12) du raccord, et/ou **en ce que** l'ergot (20) est aménagé sur la pièce d'insertion (15) autour de l'embouchure (14) et/ou de l'ouverture de passage (18) de façon périphérique continue.

4. Raccord de tuyau (5) selon l'une quelconque des revendications 1 à 3, **caractérisé en ce que** la pièce d'insertion (15) est fabriquée dans un matériau élastique, au moins au niveau de la liaison à encliquetage ou à crans (16), et/ou **en ce que** le corps de base (12) du raccord est fabriqué dans un matériau métallique et/ou **en ce que** le joint d'étanchéité (7) est fabriqué dans un matériau non élastique.

5. Raccord de tuyau (5) selon la revendication 4, **caractérisé en ce que** la pièce d'insertion (15) est fabriquée, au moins au niveau de la liaison à encliquetage ou à crans (16), dans une matière plastique, par exemple dans une matière thermoplastique ou une matière thermodurcissable ou dans un élastomère thermoplastique.

6. Raccord de tuyau (5) selon la revendication 4 ou la revendication 5, **caractérisé en ce que** le corps de base (12) du raccord est fabriqué en laiton ou en cuivre ou en acier ou dans un alliage d'au moins un de ces matériaux.

7. Raccord de tuyau (5) selon l'une quelconque des revendications 4 à 6, **caractérisé en ce que** le joint d'étanchéité (7) est fabriqué dans une matière composite à base de fibres.

8. Raccord de tuyau (5) selon l'une quelconque des revendications 1 à 7, **caractérisé en ce que** la pièce d'insertion présente une face d'appui (22) à l'extérieur, de préférence orientée radialement et/ou cylindrique, sur laquelle plaque le joint d'étanchéité (7) avec sa face intérieure (23), en position d'usage, et/ou **en ce que** le joint d'étanchéité (7) peut être emboité sur la pièce d'insertion (15) avant d'établir la liaison à encliquetage ou à crans (16) sans déformation d'un côté.

9. Raccord de tuyau (5), en particulier selon l'une quelconque des revendications 1 à 8, comportant un corps de base (12) présentant un canal d'écoulement (13), corps sur lequel est aménagée une embouchure (14) pour le raccord sur un système de conduction d'eau, une bride d'appui (6), faisant le tour de l'embouchure (14), étant aménagée sur le corps du base (12) du raccord de tuyau (5), **caractérisé en ce qu'**un logement (25) est aménagé dans le canal d'écoulement (12) du raccord de tuyau (5) sur le corps de base (12) du raccord, logement (25) dans lequel est insérée un le clapet de non-retour (26), traversée par un liquide pendant l'usage et amovible, et **en ce que** sur l'embouchure (14) une pièce d'insertion (15) en forme de manchon est reliée au corps de base (12) du raccord par une liaison à encliquetage ou à crans (16), lequel corps de base maintient le clapet de non-retour (26) à l'intérieur dans le logement (25), le clapet de non-retour (26) bloquant la liaison à encliquetage ou à crans (16) dans le sens inverse (27).

10. Raccord de tuyau (5) selon l'une quelconque des revendications 1 à 9, **caractérisé en ce que** le logement (25), sur son extrémité opposée à l'embouchure (14), se transforme en canal d'écoulement (13) du fait d'un rétrécissement de son diamètre (31).

11. Raccord de tuyau (5) selon la revendication 9 ou la revendication 10, **caractérisé en ce que**, à l'extérieur de la pièce d'insertion (15) en forme de manchon, est aménagé au moins un ergot (20) qui, en position d'usage, pénètre dans un logement d'ergot (21) aménagé sur le corps de base (12) du raccord, et **en ce que**, sur la pièce d'insertion (15) en forme de manchon, est aménagée, au niveau d'au moins un ergot (20), à l'intérieur, une face biseautée (28) de préférence conique, qui forme, vue depuis le logement, un rétrécissement d'un premier diamètre vers un deuxième diamètre, le premier diamètre étant plus grand qu'un diamètre extérieur du clapet de non-retour (26) et le deuxième diamètre étant plus petit que le diamètre extérieur du clapet de non-retour (26).

12. Raccord de tuyau (5) selon l'une quelconque des revendications 9 à 11, **caractérisé en ce que** le clapet de non-retour (26) sollicite la face biseautée intérieure (28) de la pièce d'insertion (15) en forme de manchon dans le sens inverse (27) de telle manière qu'au moins un ergot est immobilisé radialement dans le logement d'ergot (21), et/ou **en ce que**, sur la cartouche PV (26), est aménagée, radialement à l'extérieur, une contre-face biseautée (30) qui coopère avec la ou une face biseautée intérieure (28) de la pièce d'insertion (15) de telle manière qu'une sollicitation axiale du clapet de non-retour (26) est transformée en une sollicitation, dirigée radialement vers l'extérieur, d'un ergot (20) aménagé à l'extérieur de la pièce d'insertion (15).

13. Raccord de tuyau (5) selon l'une quelconque des revendications 1 à 12, **caractérisé en ce que** la ou une face d'appui (25) de la pièce d'insertion (15) est limitée, dans le sens axial, des deux côtés, par des collerettes (8) ou des épaulements (34) et/ou **en ce que** le clapet de non-retour (26) est insérée dans le logement (25) dans une orientation dans laquelle un sens inverse(27), défini par le clapet de non-retour (26), est dirigé depuis le clapet de non-retour (26) vers l'embouchure (14).

14. Raccord de tuyau (5) pour un système de conduction d'eau, comprenant un embout de tuyau (2) comportant un raccord de tuyau (5) selon l'une quelconque des revendications précédentes et un élément de raccord (9), maintenu sur le raccord de tuyau (5), pour le raccordement amovible au système de conduction d'eau, et comprenant par ailleurs un tuyau sous pression (4), lequel est fixé par adhérence et/ou complémentarité de forme au raccord de tuyau (5) avec un manchon de serrage (3).
